(19) Europäisches Patentamt
European Patent Office
Office européen des brevets

(11) **EP 1 797 757 A1**

(12) **EUROPEAN PATENT APPLICATION**
published in accordance with Art. 158(3) EPC

(43) Date of publication:
**20.06.2007 Bulletin 2007/25**

(21) Application number: **05768911.9**

(22) Date of filing: **05.08.2005**

(51) Int Cl.:
*A01N 43/64* (2006.01)   *A01N 25/22* (2006.01)
*A01N 25/32* (2006.01)

(86) International application number:
**PCT/JP2005/014424**

(87) International publication number:
**WO 2006/018990 (23.02.2006 Gazette 2006/08)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.08.2004 JP 2004238999**

(71) Applicant: **Nissan Chemical Industries, Ltd.**
**Chiyoda-ku,**
**Tokyo 101-0054 (JP)**

(72) Inventors:
• **YAMAZAKI, Masayuki,**
**Nissan Chemical Industries Ltd**
**Toyama-shi Toyama 939-2753 (JP)**
• **OTA, Masanori,**
**c/o Nissei Corporation**
**Tokyo 103-0023 (JP)**

(74) Representative: **HOFFMANN EITLE**
**Patent- und Rechtsanwälte**
**Arabellastrasse 4**
**81925 München (DE)**

(54) **DICHLOROISOCYANURIC ACID SALT COMPOSITION WITH HIGH STORAGE STABILITY**

(57) It is the present state that dichloroisocyanurates are used for only specific limited applications because they have poor storage stability, high metal corrosiveness and a very irritating odor in case where the concentration thereof in an aqueous solution is increased, and so on. An object of the present invention is to provide a dichloroisocyanurate composition having high storage stability, having low corrosiveness for various metals in case where it is used in a state of aqueous solution, and generating no irritating odor even when the concentration thereof in an aqueous solution is increased. The present invention provides a composition comprising as essential ingredients a dichloroisocyanurate and sodium metasilicate pentahydrate in which only particle surface is subjected to a treatment for reducing the degree of hydration.

**EP 1 797 757 A1**

## Description

Technical Field

The present invention relates to a dichloroisocyanurate composition.

Background Art

Dichloroisocyanurates are used in a state dissolved in water for sterilization and disinfection of swimming pool water, or livestock bam or chicken coop, or the like. It is well known that the use of dichloroisocyanurates in a state dissolved in water surely shows bacteria elimination effect for various bacteria. It is the present state that dichloroisocyanurates are used for only specific limited applications because they have poor storage stability, high metal corrosiveness and a very irritating odor in case where the concentration thereof in an aqueous solution is increased, and so on.
As a dichloroisocyanurate composition with high storage stability, it is proposed a chloroisocyanurate composition characterized by blending 10 to 60 parts by mass of at least one alkaline compound selected from magnesium oxide or magnesium hydroxide based on 100 parts by mass of at least one chlroroisocyanurate compound selected from anhydride or dihydrate of sodium dichloroisocyanurate, or potassium dichloroisocyanurate (for example, see Patent Document 1). A tablet composition for sterilization, bleaching and washing containing trichloroisocyanuric acid and/or dichloroisocyanuric acid and a hydrous aluminum sulfate salt as essential ingredients is proposed (for example, see Patent Document 2).

Patent Document 1: JP-A-1-132504 (1989) (Claims)
Patent Document 2: JP-A-1-242505 (1989) (Claims)

Disclosure of Invention

Problem to be solved by Invention

The advantage in performance of a liquid prepared by dissolving a dichloroisocyanurate in water is to show a secure bacteria elimination ability for various bacteria. On the other hand, the disadvantage is to have a low storage stability and show a vigorous metal corrosiveness, thereby it is difficult to use for bacteria elimination under a condition in which a large amount of metals are present, because it has a significant reactivity. In addition, it has another disadvantage in the environmental aspect that it generates a very irritating odor in case where the concentration thereof in an aqueous solution is increased. Therefore, the essential conditions for practical application are to have high storage stability, to keep corrosion inhibiting ability and to generate no irritating odor even when the concentration thereof in an aqueous solution is increased.
An object of the present invention is to provide a dichloroisocyanurate composition having high storage stability, having low corrosiveness for various metals in case where it is used in a state of aqueous solution, and generating no irritating odor even when the concentration thereof in an aqueous solution is increased.

Means for solving Problem

The present invention relates to a dichloroisocyanurate composition with high storage stability, comprising as essential ingredients a dichloroisocyanurate and sodium metasilicate pentahydrate in which only particle surface is subjected to a treatment for reducing the degree of hydration.
Preferable modes are as follows:

the dichloroisocyanurate composition in which the dichloroisocyanurate is sodium dichloroisocyanurate;
the dichloroisocyanurate composition in which the blending amount of the sodium metasilicate pentahydrate is 150 parts by mass or more based on 100 parts by mass of the dichloroisocyanurate;
the dichloroisocyanurate composition in which the blending amount of the sodium metasilicate pentahydrate is 150 parts by mass or more and 2000 parts by mass or less based on 100 parts by mass of the dichloroisocyanurate;
the dichloroisocyanurate composition in which pH of the composition in 1% by mass aqueous solution is 11 or more;
the dichloroisocyanurate composition in which the blending amount of the dichloroisocyanurate in the composition is 0.5 to 40% by mass; and
the dichloroisocyanurate composition in which the blending amount of the dichloroisocyanurate in the composition is 3 to 40% by mass.

Effect of Invention

The composition of the present invention shows an extremely low metal corrosiveness and irritating odor generation when it is used by dissolving in water, and has high storage stability and is excellent in stability.

It is known that that dichloroisocyanurates in a liquid dissolved in water has a sufficient bacteria elimination effect. As there was no sufficient countermeasure against metal corrosiveness and irritating odor generation from a high concentration aqueous solution until now, the applicable scope thereof was limited. The present invention leads to the change of the prior common knowledge, and makes possible to utilize the bacteria elimination ability of dichloroisocyanurate widely and effectively even when it is in a state of a high concentration aqueous solution.

Best Mode for Carrying Out the Invention

Hereinafter the present invention will be described.

For the prevention of metal corrosion in case where a dichloroisocyanurate is used in a state dissolved in water, and for the prevention of irritating odor generation from a high concentration aqueous solution, in the composition, a dichloroisocyanurate and sodium metasilicate pentahydrate (sodium metasilicate $5H_2O$: $Na_2O\cdot SiO_2\cdot 5H_2O$) in which only particle surface is subjected to a treatment for reducing the degree of hydration are contained as essential ingredients.

Between usual sodium metasilicate pentahydrate and the sodium metasilicate pentahydrate in which only particle surface is subjected to a treatment for reducing the degree of hydration in the present invention can be discriminated with a method of measuring adhered water content mentioned below.

The method of measuring adhered water content is carried out based on ignition loss test method of general test methods in The Japanese Pharmacopoeia, a sample to be tested is ignited and dried in an aluminum crucible at 800°C for 2 hours and then adhered water content (water content of hydrates) is calculated according to the following equation (Equation 1).

$$\text{Adhered water content (\%)} = [1 - A \times (W3 - W1)/(W2 - W1)] \times 100 \text{ (Equation 1).}$$

The symbols in Equation 1 are defined as follows:

A: 1.7377 (coefficient) [= 212 (molecular mass $Na_2O\cdot Si\cdot O_2 5H_2O$)/122 (molecular mass $Na_2O\cdot SiO_2$)];

W1: crucible mass (g);

W2: total mass (g) of W1 and precisely weighed mass of sample before ignition drying; and

W3: total mass (g) of W1 and precisely weighed mass of sample after ignition drying.

The measured values according to Equation 1 of the adhered water content of the sodium metasilicate pentahydrate in which only particle surface is subjected to a treatment for reducing the degree of hydration that is used in the present invention are -0.01 to -1.00% by mass.

The -0.01 to -1.00% by mass corresponds to a water content proportion that water as hydrates is eliminated from the particle surface of sodium metasilicate pentahydrate by the treatment for reducing the degree of hydration.

For the treatment for reducing the degree of hydration of only sodium metasilicate pentahydrate particle surface, drying process with ventilated hot air drying system such as fluidized bed-type drying, airflow-type drying, or the like can be adopted.

The preferable modes of the present invention will be described. The dichloroisocyanurate used in the present invention includes for example sodium salts or potassium salts of dichloroisocyanuric acid, and so on, and preferably sodium dichloroisocyanurate.

In order to make metal corrosion inhibiting effect sure and to prevent irritating odor generation from a high concentration aqueous solution, the sodium metasilicate pentahydrate in which only particle surface is subjected to a treatment for reducing the degree of hydration is blended in an amount of 150 parts by mass or more based on 100 parts by mass of the dichloroisocyanurate, and pH of the composition in 1% by mass aqueous solution is adjusted to 11 or more. The upper limit of the blending amount of the sodium metasilicate pentahydrate is 2000 parts by mass based on 100 parts by mass of the dichloroisocyanurate.

The adjustment of pH of the composition in 1% by mass aqueous solution to 11 or more leads to a sure metal corrosion inhibiting effect and a prevention of irritating odor generation from a high concentration aqueous solution.

In order to increase the storage stability of the composition, the blending amount of the dichloroisocyanurate in the composition is adjusted to 0.5 to 40% by mass or 3 to 40% by mass.

It is assumed that the blending of the sodium metasilicate pentahydrate in which only particle surface is subjected to a treatment for reducing the degree of hydration in an amount of 150 parts by mass or more based on 100 parts by mass of the dichloroisocyanurate causes a specific adsorption of silicate anion on the metal surface of iron, stainless steel, copper, brass, aluminum, or the like, and the generated adsorption layer acts as a protective layer for the metal surface to prevent attack of metal corrosion factors. This relates to the electric potential of electric double layer at the interface between metal and solution. In addition, it is assumed that the alkaline content in the sodium metasilicate pentahydrate in which only particle surface is subjected to a treatment for reducing the degree of hydration ionizes hypochlorous acid being an effective component of the dichloroisocyanurate in the aqueous solution and thereby inhibiting irritating odor generation. Further, as the composition in which a dichloroisocyanurate and sodium metasilicate pentahydrate are blended is not good in storage stability in any sense, when it is stored under a relatively high temperature condition, there is a tendency for rapid caking (consolidation). However, the use of the sodium metasilicate pentahydrate in which only particle surface is subjected to a treatment for reducing the degree of hydration, and the blending of 3 to 40% by mass of the dichloroisocyanurate make possible to inhibit it. The sodium metasilicate pentahydrate in which only particle surface is subjected to a treatment for reducing the degree of hydration can be easily obtained as commercially available products.

Examples

Hereinafter, the present invention will be described based on Examples and Comparative Examples to which the technical scope of the present invention is not limited.

In the following example, as sodium metasilicate pentahydrate (unprocessed product), trade name "Metasilicate soda 5 hydrate salt" (manufactured by Sanpo Chemical Industry Incorporated) was used. On the other hand, as sodium metasilicate pentahydrate (dry-processed product) in which only particle surface is subjected to a treatment for reducing the degree of hydration, trade name "Meta-ace 5 (high fluidity 5 hydrate) "(manufactured by Sanpo Chemical Industry Incorporated) was used. In the method of measuring adhered water content, the used "Metasilicate soda 5 hydrate salt˚ (manufactured by Sanpo Chemical Industry Incorporated) showed an adhered water content of 1.09% by mass. In addition, the used "Meta-ace 5 (high fluidity 5 hydrate) "(manufactured by Sanpo Chemical Industry Incorporated) showed an adhered water content of 0.51 % by mass.

In Examples 1-7 and Comparative Examples 1-2, the compositions having the formulation shown in Table 1 were prepared, and the following estimations were carried out.

[Metal corrosiveness test]

Each of the compositions of Examples 1-7 and Comparative Examples 1-2 shown in Table 1 was dissolved in distilled water so that the residual chlorine concentration would become 1000 ppm, the resulting dissolved solutions were placed in a polyethylene container, sealed in a state which various metal test pieces were immersed, and stored at 40˚C for 24 hours. The corrosiveness after storage was measured and the grading of corrosiveness was determined. The results are shown in Table 1.

Corrosiveness: the reduced mass of test piece by corrosion (mdd: $mg/dm^2 \cdot d$) The corrosiveness was classified based on the following criteria (grading):

A (Excellent): 0-10, B(Good): 10-50, C (No good) : >100.

[pH measurement of 1 % aqueous solution]

Each of the compositions of Examples 1-5 and Comparative Examples 1-2 shown in Table 1 was dissolved in distilled water to prepare 1% aqueous solution, and then pH of the solution was measured. The results are shown in Table 1.

[Irritating odor confirmation test]

Each of the compositions of Examples 1-5 and Comparative Examples 1-2 shown in Table 1 was dissolved in distilled water so that the residual chlorine concentration would become 1000 ppm, the resulting dissolved solutions were placed in a polyethylene container. After storing the container in a sealed state at 40˚C for 2, 4, and 6 hours, the amount of irritating odor generated was measured with a chlorine gas detector. The results are shown in Table 1.

Table 1

| | | Examples | | | | | | | Comparative Examples | |
|---|---|---|---|---|---|---|---|---|---|---|
| | | 1 | 2 | 3 | 4 | 5 | 6 | 7 | 1 | 2 |
| Formulating ingredient (%) | Sodium dichloroisoyanurate | 0.5 | 1 | 3 | 10 | 15 | 25 | 30 | 100 | 30 |
| | Sodium metasilicate $5H_2O$ (dry-processed product) | 3 | 5 | 12 | 15 | 48 | 50 | 65 | - | 30 |
| | Sodium sulfate | 33.5 | 60 | 55 | 25 | 27 | - | - | - | 30 |
| | Sodium carbonate | 33 | 10 | 30 | 25 | - | 10 | 3 | - | 5 |
| | Sodium citrate | 30 | 24 | - | 25 | 10 | 15 | 2 | - | 5 |
| Estimation | Metal corrosiveness (grading): SS-400 | A | A | A | A | A | A | A | C | C |
| | Metal corrosiveness (grading): SUS-304 | A | A | A | A | A | A | A | B | A |
| | Metal corrosiveness (grading): SUS-316 | A | A | A | A | A | A | A | A | A |
| | Metal corrosiveness (grading): copper | A | A | A | A | A | A | A | B | B |
| | Metal corrosiveness (grading): brass | A | A | A | A | A | A | A | B | C |
| | Metal corrosiveness (grading): aluminum | A | A | A | A | A | A | A | A | A |
| | pH of 1% aqueous solution | 11.69 | 11.62 | 11.56 | 11.96 | 11.44 | 11.00 | 11.67 | 6.56 | 10.42 |
| | Amount of Irritating odor generated: ppm (after 2 hours) | ND(*) | ND | ND | ND | ND | ND | ND | 25 | 20 |
| | Amount of Irritating odor generated: ppm (after 4 hours) | ND | ND | ND | ND | ND | ND | ND | 28 | 22 |
| | Amount of Irritating odor generated: ppm (after 6 hours) | ND | ND | ND | ND | ND | ND | ND | 35 | 22 |
| *ND: Not more than detection limit concentration (0.3 ppm) of gas detector | | | | | | | | | | |

EP 1 797 757 A1

In Examples 8-9 and Comparative Examples 3-4, the compositions having formulation shown in Table 2 were prepared, and the following estimations were carried out.

[Stability test]

100 g of each of the compositions of Examples 8-9 and Comparative Examples 3-4 shown in Table 2 was packed in a aluminum bag (15 cm x 10 cm), heat-sealed, and then stored in a sealed state under 55˚C condition, and it was confirmed whether or not caking was present after 24 hours- or 48 hours-storage. The results are shown in Table 2.
Table 2

|  |  | Examples | | Comparative **Examples** | |
|---|---|---|---|---|---|
|  |  | 8 | 9 | 3 | 4 |
| Formulating ingredient (%) | Sodium dichloroisocyanurate | 30 | 30 | 30 | 30 |
|  | Sodium metasilicate $5H_2O$ (dry-processed product) | 50 | 50 | - | - |
|  | Sodium metasilicate $6H_2O$ (unprocessed product) | - | - | 50 | 50 |
|  | Sodium carbonate | 20 | - | 20 | - |
|  | Sodium citrate | - | 20 | - | 20 |
| Estimation | After 24 hours-storage at 55˚C | O | O | Δ | Δ |
|  | After 48 hours-storage at 55˚C | ○ | ○ | × | × |

○: No change
Δ: A little caking (there is a tend that fluidity of powder is lowered)
×: Caking (complete consolidation)

As shown in Tables 1 and 2, the compositions of the present invention have an extremely low metal corrosiveness and irritating odor generation when they are used by dissolving in water, and have high storage stability and are excellent in stability.

Industrial Applicability

Heretofore it has been known that that dichloroisocyanurates in a liquid dissolved in water have a sufficient bacteria elimination ability. However, as there were no sufficient countermeasure against metal corrosiveness and irritating odor generation from a high concentration aqueous solution until now, the applicable scope thereof was limited. The present invention makes possible to provide dichloroisocyanurate compositions that are excellent in storage stability, have a low corrosiveness for various metals in case where they are used in an aqueous solution, and generate no irritating odor even when they are in a state of a high concentration aqueous solution. Consequently, the bacteria elimination ability that the aqueous solution of dichloroisocyanurate has and the applicable scope thereof has been limited to specific applications is widely and effectively available even under a condition which a large amount of metals are present or in a state of a high concentration aqueous solution, and thus the enlargement in the applications of the aqueous solution can be expected.

**Claims**

1. A dichloroisocyanurate composition with high storage stability, comprising as essential ingredients a dichloroisocyanurate and sodium metasilicate pentahydrate in which only particle surface is subjected to a treatment for reducing the degree of hydration.

2. The dichloroisocyanurate composition with high storage stability according to claim 1, wherein the dichloroisocyanurate is sodium dichloroisocyanurate.

3. The dichloroisocyanurate composition with high storage stability according to claim 1, wherein the blending amount of the sodium metasilicate pentahydrate is 150 parts by mass or more based on 100 parts by mass of the dichloroisocyanurate.

4. The dichloroisocyanurate composition with high storage stability according to claim 1, wherein the blending amount of the sodium metasilicate pentahydrate is 150 parts by mass or more and 2000 parts by mass or less based on 100 parts by mass of the dichloroisocyanurate.

5. The dichloroisocyanurate composition with high storage stability according to claim 1, wherein pH of the composition in 1 % by mass aqueous solution is 11 or more.

6. The dichloroisocyanurate composition with high storage stability according to claim 1, wherein the blending amount of the dichloroisocyanurate in the composition is 0.5 to 40% by mass.

7. The dichloroisocyanurate composition with high storage stability according to claim 1, wherein the blending amount of the dichloroisocyanurate in the composition is 3 to 40% by mass.

<div align="center">

**INTERNATIONAL SEARCH REPORT**

</div>

| | International application No. |
|---|---|
| | PCT/JP2005/014424 |

A. CLASSIFICATION OF SUBJECT MATTER
*A01N43/64* (2006.01), *A01N25/22* (2006.01), *A01N25/32* (2006.01)

According to International Patent Classification (IPC) or to both national classification and IPC

B. FIELDS SEARCHED

Minimum documentation searched (classification system followed by classification symbols)
*A01N43/64* (2006.01), *A01N25/22* (2006.01), *A01N25/32* (2006.01)

Documentation searched other than minimum documentation to the extent that such documents are included in the fields searched
| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 56-139406 A  (Kabushiki Kaisha Uehara Kagaku),<br>30 October, 1981 (30.10.81),<br>Full text<br>(Family: none) | 1,2,5-7<br>3,4 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>    21 October, 2005 (21.10.05) | Date of mailing of the international search report<br>    01 November, 2005 (01.11.05) |
| Name and mailing address of the ISA/<br>    Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1132504 A

- JP 1242505 A